# EUROPEAN PATENT SPECIFICATION

(11) **EP 2 834 120 B1**
(45) Date of publication and mention of the grant of the patent: **22.07.2020**
(21) Application number: 13772992.7
(22) Date of filing: 26.03.2013
(51) Int. Cl.: B60W 50/08, B60K 31/00, B60W 30/14, B60W 50/12

(54) **A METHOD AND A SYSTEM FOR ADJUSTING VELOCITY SET POINTS FOR REGULATING THE VELOCITY OF A VEHICLE**
VERFAHREN UND SYSTEM ZUM EINSTELLEN VON GESCHWINDIGKEITSSOLLWERTEN ZUR REGELUNG DER GESCHWINDIGKEIT EINES FAHRZEUGS
PROCÉDÉ ET SYSTÈME POUR AJUSTER DES POINTS DE CONSIGNE DE VITESSE POUR RÉGULER LA VITESSE D'UN VÉHICULE

(30) Priority: 02.04.2012 SE 1250324
(43) Date of publication of application: 11.02.2015
(73) Proprietor: Scania CV AB, 151 87 Södertälje (SE)
(72) Inventor: CARLSSON, Ulf, 151 48 Södertälje (SE)
(74) Representative: Scania CV AB
(86) International application number: PCT/SE2013/050339
(87) International publication number: WO 2013/151489

(56) References cited:
- EP-A1- 1 557 315
- EP-A2- 1 288 056
- WO-A1-2008/094112
- WO-A1-2008/094114
- WO-A1-2008/094114
- WO-A1-2010/144031
- WO-A1-2010/144031
- WO-A1-2011/063823
- US-A1- 2006 100 768

## Description

### Technical field of the invention

The present invention concerns a method for adjusting the set points for regulating the velocity of a vehicle according to the preamble of claim 1, and a system for adjusting the set points for regulating the velocity of a vehicle according to the preamble of claim 15.

The present invention also concerns a computer program and a computer program product that implement the method according to the invention.

### Background

Cruise control is currently commonly present in motor vehicles, such as cars, goods vehicles and buses. One purpose of cruise control is to achieve a uniform predetermined velocity. Cruise control is often realized in vehicles by two interworking systems; a cruise control system, which demands engine torque from an engine system, and a downhill speed control system, which prevents the vehicle from reaching too high a velocity, primarily on downhill stretches.

The cruise control thus adapts the engine torque to prevent retardation or alternatively applies braking action in the downhill stretches on which the vehicle accelerates because of its own weight. One overarching purpose of the cruise control is to achieve driving convenience and greater comfort for the driver of the motor vehicle, as the driver does not need to step on the accelerator in order for the vehicle to maintain a velocity set by the driver, i.e. a set velocity vₛₑₜ. The set velocity vₛₑₜ is the velocity that the driver wants the motor vehicle to maintain on flat road. The cruise control then provides an engine system in the vehicle with the set velocity vₛₑₜ as a velocity set point v_{ref} for controlling the engine system. The set velocity vₛₑₜ is often related to a speed limit for a section of road on which the vehicle is present, e.g. the set velocity vₛₑₜ is often set by the driver to the value 89 km/h where the speed limit is 90 km/h.

The downhill speed control automatically brakes the vehicle when a downhill speed control (DHSC) velocity v_{dhsc} is reached. The downhill speed control velocity v_{dhsc} is thus used as a braking set point v_{dhsc_ref} for the downhill speed control system. The downhill speed control velocity v_{dhsc} is often related to the set velocity vₛₑₜ for the cruise control by an offset, so that the downhill speed control velocity v_{dhsc} is equal to the set velocity vₛₑₜ plus the offset velocity v_{offset}, v_{dhsc} = vₛₑₜ + v_{offset}. The offset velocity v_{offset} can, for example, have a value of 3 km/h or 6 km/h, or some other suitable value that causes the cruise control system and the downhill speed control system to avoid interfering with one another. As a non-limiting example we may note that a set velocity of 89 km/h, vₛₑₜ = 89 km/h, and a downhill speed control velocity of 92 km/h, v_{dhsc} = 92 km/h commonly occur on roads that have a speed limit of 90 km/h.

The downhill velocity control thus regulates the velocity of, for instance, heavy vehicles on downhill stretches, as such vehicles accelerate on downhill stretches due to their own weight. The regulation performed by the downhill speed control system utilizes auxiliary brakes, which can comprise, for instance, a retarder, and an exhaust brake or a four-stage electronic brake (Telma). Other types of brakes can also be utilized by the downhill speed control.

WO2008/094114 A1 discloses a cruise control system for a motor vehicle and a method for controlling the target speed thereof. The cruise control system is adapted to control the engine so as to endeavour to keep the vehicle speed essentially equal to the target speed. The target speed is automatically and temporarily increased from a basic value to a modified value when it is established that the following conditions are fulfilled:
- it is detected that the vehicle e is descending a downhill slope, and
- the driving resistance of the vehicle is positive.

### Brief description of the invention

Because the known cruise control of the vehicle consists of two interworking systems; the cruise control system and the downhill speed control system, it is important that these systems actually interwork with one another and do not counteract one another. Typically a situation should be avoided in which the cruise control is demanding engine torque while the downhill speed control is simultaneously braking the vehicle, which would result in an uneconomical and uncomfortable forward travel of the vehicle. In addition, the regulation performed by each system would be negatively affected by its being counteracted by the other system, putting said regulation at risk of becoming unstable.

Relating, as noted above, the downhill speed control velocity Vdhsc to the set velocity vₛₑₜ, e.g. v_{dhsc} = vₛₑₜ + v_{offset}, causes the offset velocity v_{offset} to create a margin between the respective set points v_{dhsc_ref}, v_{ref} of the systems, wherein said margin at least prevents the systems from actively counteracting one another.

However, the set velocity vₛₑₜ set by the driver for the cruise control and thereby also, through its relation to the set velocity vₛₑₜ, the set downhill speed control velocity v_{dhsc}, entails a non-optimized regulation of the velocity of the vehicle, primarily on hilly roads or road sections that comprise one or more uphill or downhill stretches. This is because the set velocity vₛₑₜ is usually set somewhat below the prevailing speed limit, e.g. the set velocity is often set to 89 km/h, vₛₑₜ = 89 km/h, if the speed limit for the road is 90 km/h. This causes the downhill speed control velocity to be somewhat higher than said speed limit, e.g. v_{dhsc} = 92 km/h, because of the offset velocity.

Because the downhill speed control velocity here is somewhat higher than the 90 km/h speed limit, e.g. v_{dhsc} = 92 km/h, the vehicle will accelerate up to said downhill speed control velocity on relatively long downhill stretches and then remain at said velocity, v_{act} = v_{dhsc} = 92 km/h, on the downhill stretch. This causes the vehicle, for a relatively long period of time, i.e. on a large part of the downhill stretches, to exceed the prevailing speed limit, which means that the driver will be at risk of being fined by the authorities for speeding, or be at risk of getting a speeding ticket, a so-called "demerit point" on their driver's license. Many vehicles are equipped with a tachograph, which can be at least partly electronic. A tachograph records the forward travel of the vehicle, and at its velocity. In some countries the authorities can demand to see tachograph cards, and also can fine the driver if the tachograph card indicates that a violation of the speed limit has been perpetrated.

One solution to this problem would be to lower the level of the set velocity vₛₑₜ, which would also lower the downhill speed control velocity v_{dhsc} so that the speed limit would not be exceeded on downhill stretches. But then the vehicle would, on flat roads, maintain an actual vehicle velocity v_{act} that is clearly lower than the speed limit, which is thus slower than the vehicle has to travel to avoid exceeding the speed limit In other words, the vehicle will have a longer travel time for a predetermined stretch than it would have needed to have, as a lower velocity than necessary was maintained. This unnecessarily low velocity and the resulting longer travel time are experienced as annoying by the driver himself, and by other drivers on the road. The risk is consequently great that the driver will inactivate the cruise control in the vehicle in order to avoid this annoying situation.

The known cruise control thus results in a non-optimal velocity profile for the actual velocity v_{act} of the vehicle, wherein said velocity is often either lower than it needs to be, which results in an unnecessarily prolonged travel time, or so high that the driver is at risk of incurring speeding fines. The risk of being fined causes the driver to occasionally brake on downhill stretches, which is inefficient from a fuel economics standpoint.

One object of the present invention is to provide a cruise control that results in an actual vehicle velocity v_{act} that is as close to the speed limit as possible, while at the same time not exceeding said speed limit.

This object is achieved by the aforementioned method for adjusting the set points for regulating velocity according to the characterizing portion of claim 1. The object is also achieved by the aforementioned system for adjusting the set points for regulating velocity [according to claim] 15, and by the aforementioned computer program and computer program product.

According to the present invention, the value of a velocity set point v_{ref} and a braking set point v_{dhsc_ref} are adjusted based on an actual behavior of the vehicle, wherein said actual behavior can, for example, comprise an actual velocity v_{act} of the vehicle and/or a driving torque from an engine system in the vehicle and/or the utilization of a braking action in the vehicle.

The velocity set point v_{ref} and the braking set point v_{dhsc_ref} are adjusted by a shift v_{shift} that has a value corresponding to the offset v_{offset} between the set velocity vₛₑₜ and the downhill speed control velocity v_{dhsc}.

This causes the velocity set point v_{ref} and the braking set point v_{dhsc_ref} to shift between two respective end values/hysteresis values. The velocity set point v_{ref} is here shifted between the end values corresponding to the set velocity vₛₑₜ, v_{ref} = vₛₑₜ, and an end value corresponding to the set velocity vₛₑₜ minus the offset v_{offset}, v_{ref} = vₛₑₜ - v_{offset} based on the actual behavior of the vehicle. The braking set point v_{dhsc_ref} is shifted between the end values comprising the downhill speed control velocity v_{dhsc}, v_{dhsc_ref} = v_{dhsc} and the set Velocity vₛₑₜ, v_{dhsc_ref} = v_{dhsc} - v_{offset} = vₛₑₜ.

In other words, a common hysteresis is achieved by means of the present invention, which hysteresis automatically switches between two hysteresis values, with the difference corresponding to the offset v_{offset} between the hysteresis values. A control of the set points is hereby achieved simply and with very little contribution to the complexity of the cruise control system, which control of the set points results in rapid and flexible cruise control close to speed limits.

Utilizing the present invention thus provides a set point hysteresis that enables adjustment toward and the maintaining of an actual vehicle velocity v_{act} that is close to the speed limit without the vehicle having to maintain an unnecessarily low velocity on flat roads, and without the risk of incurring speeding fines and/or a driver license "demerit point" on downhill stretches. In other words, the set point hysteresis according to the invention results in the cruise control being carried out in a manner that feels intuitively correct to a driver of the vehicle. This is because the actual vehicle velocity v_{act} that results from the cruise control when the invention is utilized can track speed limits extremely well, since a maximally high average actual vehicle velocity v_{act} will be the result. Because the average actual vehicle velocity v_{act} is maximized, the travel time for a road section or road on which the vehicle is traveling is minimized.

The desire of the driver to use the cruise control system, i.e. the cruise control and the downhill speed control, will be increased as a result. As the utilization of these systems increases as a result of greater understanding and acceptance of the systems, total fuel consumption will decrease as well, since these systems generally operate the vehicle more efficiently than the driver himself would have done by means of fully manual speed control.

According to one embodiment of the invention, the shift v_{shift} between the end values/hysteresis values of the set points occurs via a ramping between the end values, which enables gentler and more comfortable regulation of the actual vehicle velocity v_{act}.

### Brief list of figures

The invention will be elucidated in greater detail below based on the accompanying figures, in which the same reference designations are used for the same components, and wherein:
Figure 1 shows a flow diagram for the method according to the present invention,
Figures 2a-b show non-limiting examples of adjustments of the set points according to the present invention,
Figure 3 shows a statechart diagram according to embodiments of the present invention, and
Figure 4 shows a control unit according to the present invention.

### Description of preferred embodiments

A vehicle is affected by its own weight as it travels. This effect is especially pronounced on uphill and downhill stretches that are relatively steep. A steep uphill stretch refers here to a hill on which the vehicle will lose velocity due to its heavy train weight in relation to the engine performance of the vehicle. The vehicle will accelerate on a steep downhill stretch in a corresponding manner, due to its heavy train weight.

Because the downhill speed control velocity v_{dhsc} is related to the set velocity vₛₑₜ by an offset velocity, v_{dhsc} = vₛₑₜ + v_{offset}, an undesirable profile is often obtained for the actual velocity of the vehicle v_{act}, particularly on hilly roads. Said profile is undesirable because it often results in an unnecessarily low actual vehicle velocity v_{act} on flat roads and/or an actual vehicle velocity v_{act} that exceeds the speed limits on long downhill stretches.

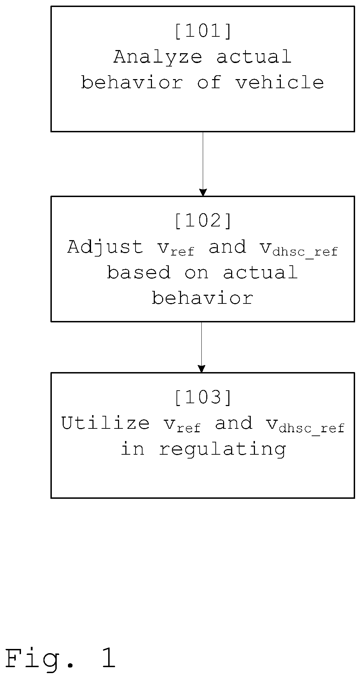

Figure 1 shows a schematic flow diagram of the method according to the present invention, which results in a profile for the actual vehicle velocity v_{act} that is optimized in relation to the highest permissible velocity, i.e. to a speed limit for the road or section of road on which the vehicle is being driven. The downhill speed control velocity v_{dhsc} here is, as described above, related to the set velocity vₛₑₜ for the cruise control.

An actual behavior for the vehicle is analyzed in a first step 101 of the method. As described below, such an actual behavior can comprise an actual velocity v_{act} for the vehicle, the utilization of a driving torque from the engine system and/or the utilization of braking action by the downhill speed control.

An adjustment of the velocity set point v_{ref} is performed in a second step 102 of the method, which set point constitutes a set point for the cruise control, and of the braking set point v_{dhsc_ref}, which set point constitutes a set point for the downhill speed control, by at least one shift v_{shift}. Both the velocity set point v_{ref} and the braking set point v_{dhsc_ref} are thus adjusted in this step by said shift v_{shift}. The value of the shift corresponds here to the offset velocity, v_{shift} = v_{offset}. The adjustments by the shift v_{shift} are based on said analysis of the actual behavior of the vehicle.

The velocity set point v_{ref} is utilized in a third step 103 of the method as a set point in connection with the regulation of the cruise control, while the braking set point v_{dhsc_ref} [is utilized] as a set point in connection with the regulation of the downhill speed control.

Through this adjustment of the set points for the cruise control, i.e. of the velocity set point v_{ref}, and for the downhill speed control, i.e. of the braking set point v_{dhsc_ref}, a regulation of the cruise control system and the downhill speed control system is achieved by means of the present invention so that these systems do not counteract one another, and so that a maximally high average velocity for the road or road section is achieved without the driver risking a "demerit point" on his driver's license, or a speeding fine.

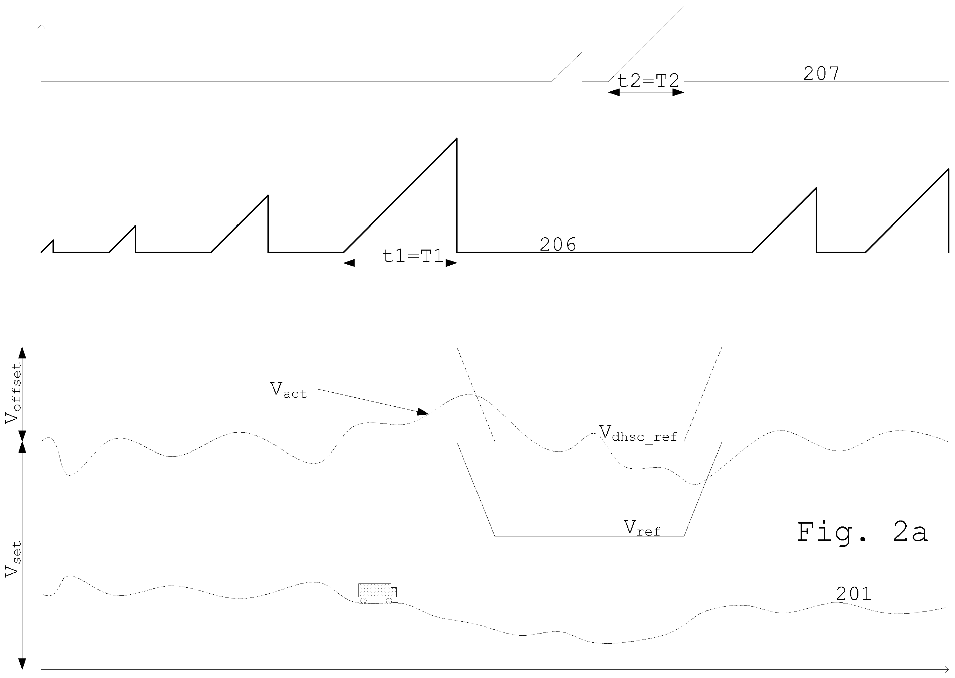

According to one embodiment of the present invention, the adjustment of both the velocity set point v_{ref} and the braking set point v_{dhsc_ref} by the shift v_{shift} constitutes a common hysteresis for the velocity set point v_{ref} and for the braking set point v_{dhsc_ref}. This is illustrated by means of a non-limiting example in Figures 2a-b.

Figures 2a-b show an example of a road profile 201 on which the vehicle is being driven. The road profile has both uphill and downhill sections over which the vehicle is driving. The driver, or another user in the vehicle, such as a passenger, has set the set velocity vₛₑₜ and the downhill speed control velocity v_{dhsc} that he wishes to use in controlling the velocity of the vehicle. In this example, the set velocity vₛₑₜ and the downhill speed control velocity v_{dhsc} are constant over the road section, which means, in practice, that the driver will not select a new set velocity vₛₑₜ on this section of road. The cruise control according to the present invention will, for the road profile 201, result in an actual velocity v_{act} in a manner that is described in greater detail below.

The curve 202 illustrates whether and when the cruise control will demand torque from the engine system in the vehicle. This is illustrated here schematically for the curve 202 with a low value (zero) when no torque is demanded and a high value (one) when torque is demanded from the engine system.

The curve 203 schematically illustrates a third t₃ hysteresis timer, which will be described in greater detail below.

The curve 204 illustrates whether and when the downhill speed control will demand braking torque from the brake system in the vehicle. This is illustrated here schematically for the curve 204 with a low value (zero) when no torque is demanded and a high value (one) when braking torque is demanded.

The curve 205 schematically illustrates a fourth t₄ hysteresis timer, which will be described in greater detail below.

The curve 206 schematically illustrates a first t₁ hysteresis timer, which will be described in greater detail below.

The curve 207 schematically illustrates a second t₂ hysteresis timer, which will be described in greater detail below.

The curve v_{ref} shows the velocity set point v_{ref} that is used to control the engine system in the vehicle. The curve v_{dhsc_ref} shows the braking set point v_{dhsc_ref} that is used to control the brake system in the vehicle. As Figures 2a-b show, both the velocity set point v_{ref} and the braking set point v_{dhsc_ref} in this example are adjusted downward by a shift v_{shift} from the set velocity vₛₑₜ and the downhill speed control velocity v_{dhsc}. The shift here has the same value as the offset v_{offset} between the set velocity vₛₑₜ and the downhill speed control velocity v_{dhsc}, v_{shift} = v_{offset}. This means that an adjustment in the form of a decrease in the velocity set point v_{ref} and the braking set point v_{dhsc_ref} will result in the braking set point v_{dhsc_ref} having the same value as the set velocity vₛₑₜ, v_{dhsc_ref} = v_{dhsc_ref} - v_{offset} = vₛₑₜ. In connection with said decrease, the velocity set point v_{ref} acquires a value that is lower than the set velocity vₛₑₜ by the offset v_{offset}, v_{ref} = vₛₑₜ - v_{offset}.

According to one embodiment of the invention, the adjustment of the velocity set point v_{ref} and the braking set point v_{dhsc_ref} constitutes a common hysteresis for the velocity set point v_{ref} and for the braking set point v_{dhsc_ref}. This common hysteresis means that a higher actual average vehicle velocity can be maintained over the road section, since the actual vehicle velocity v_{act} can be kept closer to the speed limit than with earlier systems.

The ways in which the shift of the velocity set point v_{ref} and the braking set point v_{dhsc_ref} can be controlled according to various embodiments of the present invention will be described below for the non-limiting examples shown in Figures 2a-b. According to one embodiment of the present invention, which is illustrated schematically in Figure 2a, the adjustment of the velocity set point v_{ref} and the braking set point v_{dhsc_ref} is based on an actual velocity v_{act} of the vehicle. The actual velocity v_{act} of the vehicle comprises, in this document, the velocity that the vehicle actually reaches as a result of the forces acting on the vehicle, such as the demanded engine torque, road inclination, roll resistance, wind resistance and other forces. The actual velocity v_{act} can be measured in the vehicle, or it can be estimated.

According to this embodiment of the invention, both the velocity set point v_{ref} and braking set point v_{dhsc_ref} are adjusted downward by a shift v_{shift} corresponding to the offset v_{offset} if the actual velocity v_{act} of the vehicle exceeds the selected set velocity vₛₑₜ during a first predetermined time period T₁. A first hysteresis timer t₁, which is activated in a first state S1 with high set points and illustrated by the curve 206, begins to increment when the actual velocity v_{act} of the vehicle exceeds the selected set velocity vₛₑₜ, as can be seen in Figure 2a. The first state S1 is described in greater detail below. If the actual velocity v_{act} falls below the set velocity vₛₑₜ again, the first hysteresis timer t₁ is zeroed. The fourth time the actual velocity v_{act} exceeds the set velocity vₛₑₜ in this non-limiting example, the first hysteresis timer will increment t₁ up to a value that exceeds the first predetermined time period T₁, which means that the actual velocity v_{act} has been greater than the set velocity vₛₑₜ for at least the first predetermined time period T₁. According to one embodiment of the invention, said predetermined time period T₁ has a duration that is within the range 2 s - 30 s, and preferably with the range 5 s - 15 s.

Both the velocity set point v_{ref} and the braking set point v_{dhsc_ref} are thus reduced by a value corresponding to the offset v_{offset} because the actual velocity v_{act} has been greater than the set velocity vₛₑₜ for at least the first predetermined time period T₁, as is schematically illustrated in Figure 2a.

According to one embodiment of the invention, both the velocity set point v_{ref} and the braking set point v_{dhsc_ref} are adjusted upward by a shift v_{shift} corresponding to the offset v_{offset} if the actual velocity v_{act} is below the set velocity vₛₑₜ for a second predetermined time period T₂. A second hysteresis timer t₂, which is activated in a second state S2 with low set points and illustrated by the curve 207, begins to increment t₂ when the actual velocity v_{act} of the vehicle falls below the new set velocity vₛₑₜ, as can be see in the figure. The second state S2 is described below. If the actual velocity v_{act} exceeds the set velocity vₛₑₜ again, the second hysteresis timer hysteresis timer t₂ is zeroed. The third time the actual velocity v_{act} falls below the set velocity vₛₑₜ in Figure 2a, the second hysteresis timer t₂ will increment to a value that exceeds the second predetermined time period T₂. Here the actual velocity v_{act} has thus been lower than the set velocity vₛₑₜ for at least the second predetermined time period T₂, as a result of which both the velocity set point v_{ref} and the braking set point v_{dhsc_ref} must be adjusted upward by the offset v_{offset} according to the embodiment. According to one embodiment of the invention, the second predetermined time period T₂ has a duration that is within the range 2 s - 30 s, and preferably within the range 5 s - 15 s.

As Figure 2a shows, the set velocity vₛₑₜ corresponds to the reduced value for the braking set point v_{dhsc_ref}, as a result of which the actual velocity v_{act} can also be compared with the reduced value for the braking set point v_{dhsc_ref} if doing so offers implementation advantages.

The adjustments between the two extreme positions for both the velocity set point v_{ref} and the braking set point v_{dhsc_ref} can, according to one embodiment of the invention, be performed in alternating fashion, so that the velocity set point v_{ref} and the braking set point v_{dhsc_ref} are alternatingly adjusted downward by a shift v_{shift} if the actual velocity v_{act} exceeds the set velocity vₛₑₜ for the first predetermined time period T₁, or adjusted upward by a shift v_{shift} if the actual velocity v_{act} is below the set velocity vₛₑₜ for the second predetermined time period T₂.

An adjustment of the velocity set point v_{ref} is hereby achieved between one end value corresponding to the set velocity vₛₑₜ, v_{ref} = vₛₑₜ, and one end value corresponding to the set velocity vₛₑₜ minus the offset v_{offset}, v_{ref} = vₛₑₜ - v_{offset}. The braking set point v_{dhsc_ref} is adjusted alternatingly in corresponding fashion between the end values comprising the downhill speed control velocity v_{dhsc}, v_{dhsc_ref} = v_{dhsc} and the set velocity vₛₑₜ, v_{dhsc_ref} = v_{dhsc} - v_{offset} = vₛₑₜ. These adjustments thus result here in a common hysteresis that automatically alternates between two hysteresis values, with the difference corresponding to the offset v_{offset} between the hysteresis values.

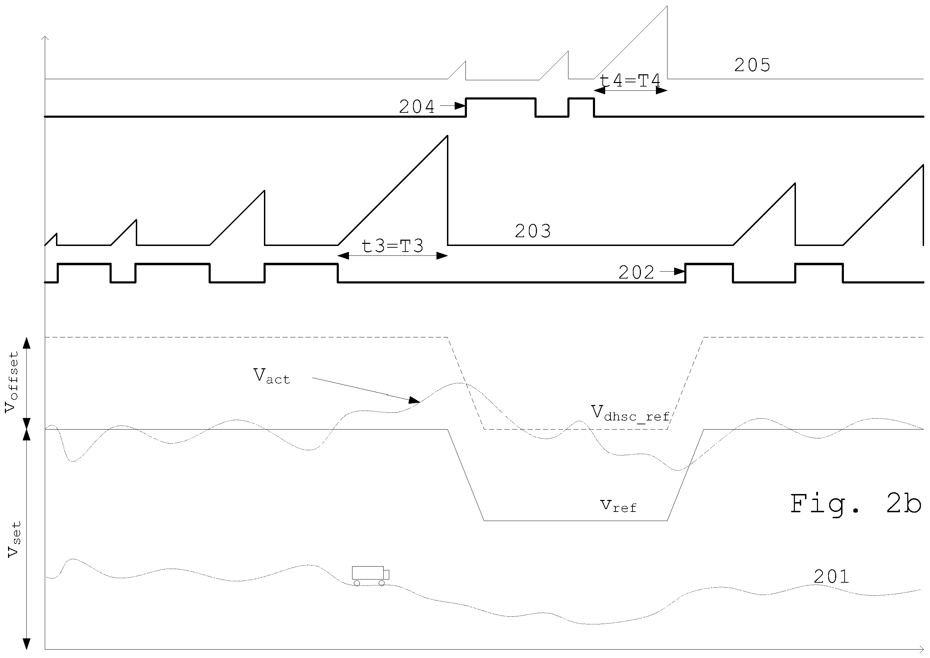

As shown in Figure 2a, the shift v_{shift} according to one embodiment can be performed gradually so that a ramping between the end values for the velocity set point v_{ref} and the braking set point v_{dhsc_ref} is obtained. This ramping of the set points causes the comfort of the driver to be enhanced. According to one embodiment of the present invention, the adjustment of the velocity set point v_{ref} and the braking set point v_{dhsc_ref} is based on a driving torque from an engine system in the vehicle, which is shown schematically in Figure 2b, wherein the curve 202 for the torque demanded from the engine system in the vehicle has a low value (zero) when no torque is demanded from the engine system and a value (one) when torque is demanded from the engine system.

Here both the velocity set point v_{ref} and the braking set point v_{dhsc_ref} are adjusted downward by a shift v_{shift} corresponding to the offset v_{offset} if the vehicle has traveled without driving torque for a third predetermined time period T₃. This is illustrated in Figure 2b by the curve 203. A third hysteresis timer t₃ is activated in a first state S1 with high set points, and begins here to increment when no driving torque is being demanded from the engine system, i.e. when the curve 202 has a low value (zero). The first state is described in greater detail below. If a driving torque is demanded, the third hysteresis timer t₃ is zeroed. The fourth time no torque is demanded, the third hysteresis timer t₃ will increment up to a value that exceeds the third predetermined time period T₃, which means that no torque is demanded for at least the third predetermined time period T₃. The velocity set point v_{ref} and the braking set point v_{dhsc_ref} have thus been adjusted downward here, as is illustrated in Figure 2b. According to one embodiment of the invention, the third predetermined time period T₃ has a duration that is within the range 2 s - 30 s, and preferably within the range 5 s - 15 s.

According to one embodiment of the present invention, the adjustment of the velocity set point v_{ref} and the braking set point v_{dhsc_ref} is based on a braking action from a downhill speed control, which is shown schematically in Figure 2b, wherein the curve 204 shows the braking action as a low value (zero) when no torque is demanded and a high value (one) when braking torque is demanded. Here both the velocity set point v_{ref} and the braking set point v_{dhsc_ref} are adjusted upward by a shift v_{shift} corresponding to the offset v_{offset} if the vehicle has traveled without braking action for a fourth predetermined time period T₄. As illustrated by the curve 205, a fourth hysteresis timer t₄ will be incremented when no braking action is utilized in the second state S2 with low set points, as is described below. If the braking action is utilized again, the fourth hysteresis timer t₄ is zeroed. The first incrementing of the fourth hysteresis timer t₄ is dependent upon the system having transitioned to the second state S2 when the set points began to be ramped down from their high values, whereupon the incrementing first begins when the fourth hysteresis timer t₄ is activated because the system is in the second state S2. The third time the braking action is not utilized in Figure 2b, the fourth hysteresis timer t₄ will increment to a value that exceeds the fourth predetermined time period T₄. Here the vehicle has thus traveled without braking action for at least the fourth predetermined time period T₄, with the result that both the velocity set point v_{ref} and the braking set point v_{dhsc_ref} must be adjusted upward by the offset v_{offset} according to the embodiment. According to one embodiment of the invention, the fourth predetermined time period T₄ has a duration that is within the range 2 s - 30 s, and preferably within the range 5 s - 15 s.

The adjustments between the two extreme positions for both the velocity set point v_{ref} and the braking set point v_{dhsc_ref} can, according to one embodiment of the invention, be performed in alternating fashion, so that the velocity set point v_{ref} and the braking set point v_{dhsc_ref} are alternatingly adjusted downward by the shift v_{shift} if the vehicle travels without driving torque for the third predetermined time period T₃, and upward by a shift v_{shift} if the vehicle travels without braking action for a fourth predetermined time period T₄.

Here again the adjustments result in a common hysteresis for the velocity set point v_{ref} and the braking set point v_{dhsc_ref}, wherein the hysteresis automatically alternates between two hysteresis values, v_{ref} = vₛₑₜ and v_{ref} = vₛₑₜ - v_{offset}, or v_{dhsc_ref} = v_{dhsc}, and v_{dhsc_ref} = v_{dhsc} - v_{offset} = vₛₑₜ, by a difference corresponding to the offset v_{offset} between the hysteresis values. Said shift v_{shift} can be performed gradually with a ramping between the end values for the velocity set point v_{ref} and the braking set point v_{dhsc_ref}.

An adjustment of the velocity set point v_{ref} is hereby obtained between one end value corresponding to the set velocity vₛₑₜ, v_{ref} = vₛₑₜ and one end value corresponding to the set velocity vₛₑₜ minus the offset v_{offset}, v_{ref} = vₛₑₜ - v_{offset}. The braking set point v_{dhsc_ref} is alternating adjusted in corresponding fashion between the end values comprising the downhill speed control velocity v_{dhsc}, v_{dhsc_ref} = v_{dhsc} and the set velocity vₛₑₜ, v_{dhsc_ref} = v_{dhsc} - v_{offset} = vₛₑₜ.

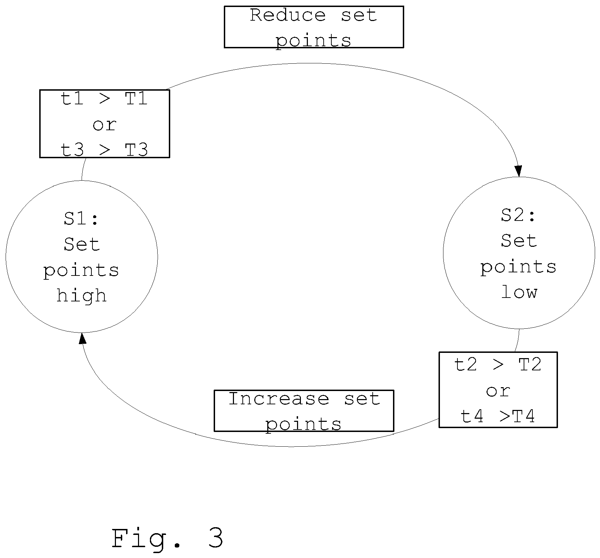

Figure 3 shows a statechart diagram for a pair of embodiments of the present invention. In a first state S1, the velocity set point v_{ref} and the braking set point v_{dhsc_ref} are high, i.e. the velocity set point v_{ref} corresponds to the set velocity vₛₑₜ, v_{ref} = vₛₑₜ and the braking set point v_{dhsc_ref} corresponds to the downhill speed control velocity v_{dhsc}, v_{dhsc_ref} = v_{dhsc} = vₛₑₜ + v_{offset}.

In the first state S1, the first t₁ and/or the third t₃ hysteresis timer is/are activated. As described above, the first hysteresis timer t₁ begins to increment in the first state S1 when the actual velocity v_{act} of the vehicle exceeds the set velocity vₛₑₜ. If the actual velocity v_{act} falls below the set velocity vₛₑₜ again, the first hysteresis timer t₁ is zeroed. The third hysteresis timer t₃ will increment correspondingly in the first state S1 if no driving torque is demanded from the engine system. If a driving torque is demanded, the third hysteresis timer t₃ is zeroed again.

If the first hysteresis timer t₁ reaches the first predetermined time period T₁, or if the third hysteresis timer t₃ reaches the third predetermined time period T₃, then the set points i.e. the velocity set point v_{ref} and the braking set point v_{dhsc_ref}, will decrease to their low levels and the method will transition to a second state S2. In the second state S2, the velocity set point v_{ref} has a value corresponding to the set velocity vₛₑₜ minus the offset v_{offset}, v_{ref} = vₛₑₜ - v_{offset}, while the braking set point v_{dhsc_ref} has a value corresponding to the set velocity vₛₑₜ, v_{dhsc_ref} = vₛₑₜ.

The second t₂ and/or the fourth t₄ hysteresis timer is/are activated in the second state S2. The second hysteresis timer t₂ begins to increment in the second state S2 when the actual velocity v_{act} of the vehicle falls below the set velocity vₛₑₜ. If the actual velocity v_{act} exceeds the set velocity vₛₑₜ again, the second hysteresis timer t₂ is zeroed. The fourth hysteresis timer t₄ will be correspondingly incremented in the second state S2 if no braking action is utilized. If the braking action is utilized, the fourth hysteresis timer t₄ is zeroed again.

If the second hysteresis timer t₂ reaches the second predetermined time period T₂, or if the fourth hysteresis timer t₄ reaches the fourth predetermined time period T₄, then the set points, i.e. the velocity set point v_{ref} and the braking set point v_{dhsc_ref}, will be increased to their high levels and the method will transition to the first state S1. As noted above, the velocity set point v_{ref} and the braking set point v_{dhsc_ref} are high in the first state, i.e. the velocity set point v_{ref} corresponds to the set velocity vₛₑₜ, v_{ref} = vₛₑₜ and the braking set point v_{dhsc_ref} corresponds to the downhill speed control velocity v_{dhsc}, v_{dhsc_ref} = v_{dhsc} = vₛₑₜ + V_{offset}.

According to one embodiment of the present invention, the adjustment of the velocity set point v_{ref} and the braking set point v_{dhsc_ref} is performed downward by the offset v_{offset} if the vehicle is on a long downhill stretch, wherein the downhill stretch has a length that exceeds or is equal to a predetermined length L. Said predetermined length L can, for instance, be within the range 25 meters - 1,000 meters, and preferably within the range 150 meters - 500 meters. On long downhill stretches the cruise control demands no engine torque from the engine system, and the actual vehicle velocity v_{act} increases due to the weight of the vehicle. Consequently a specific length of the downhill stretch provides a direct or indirect link to the actual behavior of the vehicle, which link can be utilized by the invention according to the embodiment.

According to one embodiment, a determination is made as to whether the downhill stretch has a length exceeding the predetermined length L based on map data and positioning data such as GPS (Global Positioning System). Map data with topographical information are currently available, and can be used together with a determined position of the vehicle to determine the length of a downhill stretch in front of the vehicle. Other information, such as radar information in combination with information related to the road inclination can also be used to determine whether the length of the downhill section exceeds the predetermined length L. The predetermined length L can be set so that no engine torque will be demanded from the engine system, for example, for a time corresponding to the third predetermined time period T₃. The adjustment of the set points based on the actual behavior of the vehicle can thereby be carried out by analyzing whether the length of the downhill stretch exceeds the predetermined length L.

According to one aspect of the present invention, a system for regulating the velocity of a vehicle is provided.

Said system comprises a cruise control, which regulates an engine system with a velocity set point v_{ref}, wherein the regulation is based on a selected set velocity vₛₑₜ chosen by, for instance, a driver. The system further comprises a downhill speed control, which regulates a brake system in the vehicle with a braking set point v_{dhsc_ref}, wherein said regulation is based on the downhill speed control velocity v_{dhsc}. As noted above, the downhill speed control velocity v_{dhsc} is related to the set velocity vₛₑₜ by an offset v_{offset}, v_{dhsc} = vₛₑₜ + v_{offset}.

The system further comprises an adjusting element, which is arranged so as to adjust the velocity set point v_{ref} and the braking set point v_{dhsc_ref} by at least one shift v_{shift}. The shift v_{shift} has a value corresponding to the offset v_{offset}, v_{shift} = v_{offset}. The adjusting element is arranged so as to perform the adjustment of the velocity set point v_{ref} and the braking set point v_{dhsc_ref} based on an actual behavior of the vehicle, such as the actual velocity v_{ref}, of the vehicle, on the engine torque demanded from the engine system and/or the utilized braking action, as described in relation to the embodiments of the method above.

One skilled in the art will perceive that a method for adjusting the set points according to the present invention could also be implemented in a computer program which, when it is executed in a computer, results in the computer carrying out the method. Said computer program normally consists of a computer program product 403 stored on a digital storage medium, wherein the computer program is contained in the computer-readable medium of the computer program product. Said computer-readable medium consists of a suitable memory, such as: ROM (Read-Only Memory), PROM (Programmable Read-Only Memory), EPROM (Erasable PROM), Flash memory, EEPROM (Electrically Erasable PROM), a hard disk unit, etc.

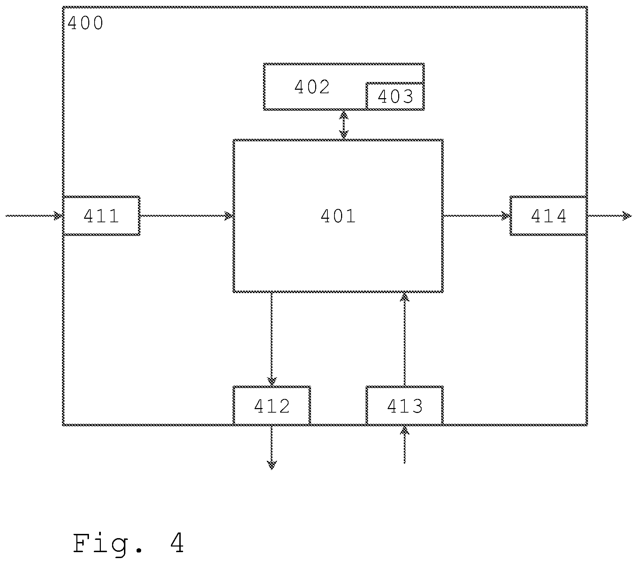

Figure 4 schematically shows a control unit 400. The control unit 400 comprises a calculating unit 401, which can consist of essentially any suitable type of processor or microcomputer, such as a circuit for digital signal processing (Digital Signal Processor, DSP), or a circuit with a predetermined specific function (Application Specific Integrated Circuit, ASIC). The calculating unit 401 is associated with a memory unit 402, which is arranged in the control unit 400, which memory unit furnishes the calculating unit 401 with, e.g. the stored program code and/or the stored data that the calculating unit 401 needs to be able to perform calculations. The calculating unit 401 is also arranged so as to store partial or final results of calculations in the memory unit 402.

The control unit 400 is further provided with devices 411, 412, 413, 414 for respectively receiving and transmitting input and output signals. Said input and output signals can have waveforms, pulses or other attributes that can be detected by the devices 411, 413 for receiving input signals as information, and can be converted into signals that can be processed by the calculating unit 401. Said signals can then be furnished to the calculating unit 401. The devices 412, 414 for transmitting output signals are arranged so as to convert signals received from the calculating unit 401 to produce output signals by, e.g., modulating the signals, which can be transferred to other parts of the system for adjusting the set points and/or for use in controlling actuators in the system.

Each and every one of the connections to the devices for respectively receiving and transmitting input and output signals can consist of one or more of a cable, a data bus, such as a CAN bus (Controller Area Network bus), a MOST bus (Media Orientated Systems Transport bus), or any other bus configuration, or of a wireless connection.

One skilled in the art will perceive that the aforesaid computer can consist of the calculating unit 401, and that the aforesaid memory can consist of the memory unit 402.

One skilled in the art will also perceive that the foregoing system can be modified according to the various embodiments of the method according to the invention. Furthermore, the invention pertains to a motor vehicle, such as a goods vehicle or a bus, comprising at least one system for adjusting the set points according to the invention.

The present invention is not limited to the embodiments of the invention described above, but pertains to and includes all embodiments within the protective scope of the accompanying independent claims.

## Claims

1. A method for adjusting the set points for regulating the velocity of a vehicle, wherein said velocity regulation is performed through the utilization of at least:
- a cruise control, which controls an engine system with a velocity set point (v_{ref}) based on a selected set velocity (vₛₑₜ); and
- a downhill speed control, which controls a brake system with a braking set point (v_{dhsc_ref}) based on a downhill speed control velocity (v_{dhsc}), wherein said downhill speed control velocity (v_{dhsc}) is related to said set velocity (vₛₑₜ) by an offset (v_{offset})
**characterized by:**
- an adjustment of said velocity set point (v_{ref}) and of said braking set point (v_{dhsc_ref}) by at least one shift (v_{shift}), which has a value corresponding to said offset (v_{offset}, v_{shift}= v_{offset}), wherein
- said adjustment is performed based on an actual behavior of said vehicle.

2. A method according to claim 1, wherein said adjustment by said at least one shift (v_{shift}) constitutes a common hysteresis for said velocity set point (vₛₑₜ) and for said braking set point (v_{dhsc_ref}).

3. A method according to any of claims 1-2, wherein
- said actual behavior comprises an actual velocity (v_{act}) for said vehicle, and
- said adjustment adjusts said velocity set point (v_{ref}) and said braking set point (v_{dhsc_ref}) downward by said offset (v_{offset}) if said actual velocity (v_{act}) exceeds said set velocity (vₛₑₜ) for a first predetermined time period (T₁).

4. A method according to any of claims 1-3, wherein
- said actual behavior comprises an actual velocity (v_{act}) for said vehicle, and
- said adjustment adjusts said velocity set point (v_{ref}) and said braking set point (v_{dhsc_ref}) upward by said offset (v_{offset}) if said actual velocity (v_{act}) is below said set velocity (vₛₑₜ) for a second predetermined time period (T₂).

5. A method according to any of claims 3-4, wherein said adjustment alternatingly adjusts said velocity set point (v_{ref}) and said braking set point (v_{dhsc}__{ref}) downward or upward by said offset (v_{offset}) as follows:
- downward if said actual velocity (v_{act}) exceeds said set velocity (vₛₑₜ) for a first predetermined time period (T₁), and
- upward if said actual velocity (v_{act}) is below said set velocity (vₛₑₜ) for a second predetermined time period ' (T₂).

6. A method according to any of claims 1-5, wherein
- said actual behavior comprises a utilization of a driving torque from an engine system in said vehicle, and
- said adjustment adjusts said velocity set point (v_{ref}) and said braking set point (v_{dhsc_ref}) downward by said offset (v_{offset}) if said vehicle is driven without said driving torque for a third predetermined time period ' (T₃).

7. A method according to any of claims 1-6, wherein
- said actual behavior comprises a utilization of a braking action from a downhill speed control, and
- said adjustment adjusts said velocity set point (v_{ref}) and said braking set point (v_{dhsc_ref}) upward by said offset (v_{offset}) if said vehicle is driven without said braking action for a fourth predetermined time period (T₄).

8. A method according to any of claims 6-7, wherein said adjustment alternatingly adjusts said velocity set point (v_{ref}) and said braking set point (v_{dhsc_ref}) downward or upward by said offset (v_{offset}) as follows:
- downward if said vehicle is driven without said driving torque for a third predetermined time period (T₃), and
- upward if said vehicle is driven without said braking action for a fourth predetermined time period (T₄).

9. A method according to any of claims 1-8, wherein said adjustment adjusts said velocity set point (v_{ref}) and said braking set point (v_{dhsc_ref}) downward by offset (v_{offset}) if said vehicle is on a downhill stretch that has at least a predetermined length (L).

10. A method according to any of claims 1-9, wherein said adjustment results in a hysteresis for said velocity set point (v_{ref}) and said braking set point (v_{dhsc_ref}), which automatically alternates between two hysteresis values, wherein a difference between said two hysteresis values is defined by said offset (v_{offset}).

11. A method according to any of claims 1-10, wherein said at least one shift (v_{shift}) is applied gradually so that said velocity set point (v_{ref}) and said braking set point (v_{dhsc_ref}) are ramped from a first to a second respective value.

12. A method according to any of claims 1-11, wherein said set velocity (vₛₑₜ) is related to a speed limit for a road section on which said vehicle is located.

13. A computer program comprising program code that carries out the method according to any of claims 1-12 when said program code is executed in a computer.

14. A computer program product comprising a computer-readable medium and a computer program according to claim 13, wherein said computer program is contained in said computer-readable medium.

15. A system for regulating the velocity of a vehicle comprising at least:
- one cruise control, which regulates an engine system with a velocity set point (v_{ref}) based on a selected set velocity (vₛₑₜ); and
- a downhill speed control, which regulates a brake system with a braking set point (v_{dhsc_ref}) based on a downhill speed control velocity (v_{dhsc}), wherein said downhill speed control velocity (v_{dhsc}) is related to said set velocity (vₛₑₜ) by an offset (v_{offset}),
**characterized by:**
- an adjusting element, arranged so as to adjust said velocity set point (v_{ref}) and said braking set point (v_{dhsc_ref}) by at least one shift (v_{shift}), which has a value corresponding to said offset (v_{offset}, v_{shift} = v_{offset}), wherein said adjusting element is arranged so as to perform said adjustment based on an actual behavior of said vehicle.

## Patentansprüche

1. Verfahren zum Einstellen der Sollwerte zum Regeln der Geschwindigkeit eines Fahrzeugs, wobei die Geschwindigkeitsregelung durchgeführt wird unter Verwendung von zumindest:
- einem Fahrtregler, der ein Motorsystem mit einem Geschwindigkeitssollwert (v_{ref}) basierend auf einer gewählten eingestellten Geschwindigkeit (vₛₑₜ) steuert, und
- einer Bergabfahrtsgeschwindigkeitssteuerung, die ein Bremssystem mit einem Bremssollwert (v_{dhsc_ref}) basierend auf einer Bergabfahrtsgeschwindigkeitssteuerungsgeschwindigkeit (v_{dhsc}) steuert, wobei die Bergabfahrtsgeschwindigkeitssteuerungsgeschwindigkeit (v_{dhsc}) mit der eingestellten Geschwindigkeit (vₛₑₜ) über einen Offset (v_{offset}) in Beziehung steht,
**gekennzeichnet durch**:
- eine Anpassung des Geschwindigkeitssollwertes (v_{ref}) und des Bremssollwertes (v_{dhsc_ref}) durch zumindest eine Veränderung (v_{shift}), die einen dem Offset (v_{offset}, v_{shift} = v_{offset}) entsprechenden Wert hat, wobei
- die Anpassung basierend auf einem aktuellen Verhalten des Fahrzeugs durchgeführt wird.

2. Verfahren nach Anspruch 1, bei dem die Anpassung durch die zumindest eine Veränderung (v_{shift}) eine gemeinsame Hysterese für den Geschwindigkeitssollwert (vₛₑₜ) und für den Bremssollwert (v_{dhsc_ref}) darstellt.

3. Verfahren nach einem der Ansprüche 1 bis 2, wobei
- das aktuelle Verhalten eine aktuelle Geschwindigkeit (v_{act}) für das Fahrzeug umfasst, und
- die Anpassung den Geschwindigkeitssollwert (v_{ref}) und den Bremssollwert (v_{dhsc_ref}) durch den Offset (v_{offset}) nach unten anpasst, wenn die aktuelle Geschwindigkeit (v_{act}) die eingestellte Geschwindigkeit (vₛₑₜ) für eine erste vorbestimmte Zeitdauer (T₁) übersteigt.

4. Verfahren nach einem der Ansprüche 1 bis 3, wobei
- das aktuelle Verhalten eine aktuelle Geschwindigkeit (v_{act}) für das Fahrzeug umfasst, und
- die Anpassung den Geschwindigkeitssollwert (v_{ref}) und den Bremssollwert (v_{dhsc_ref}) durch den Offset (v_{offset}) nach oben anpasst, wenn die aktuelle Geschwindigkeit (v_{act}) für eine zweite vorbestimmte Zeitdauer (T₂) unterhalb der eingestellten Geschwindigkeit (vₛₑₜ) ist.

5. Verfahren nach einem der Ansprüche 3 bis 4, wobei die Anpassung abwechselnd den Geschwindigkeitssollwert (v_{ref}) und den Bremssollwert (v_{dhsc_ref}) durch den Offset (v_{offset}) nach unten oder oben anpasst wie folgt:
- nach unten, wenn die aktuelle Geschwindigkeit (v_{act}) für eine erste vorbestimmte Zeitdauer (T₁) die eingestellte Geschwindigkeit (vₛₑₜ) übersteigt, und
- nach oben, wenn die aktuelle Geschwindigkeit (v_{act}) für eine zweite vorbestimmte Zeitdauer (T₂) unterhalb der eingestellten Geschwindigkeit (vₛₑₜ) ist.

6. Verfahren nach einem der Ansprüche 1 bis 5, wobei
- das aktuelle Verhalten eine Verwendung eines Antriebsmoments eines Motorsystems in dem Fahrzeug umfasst, und
- die Anpassung den Geschwindigkeitssollwert (v_{ref}) und den Bremssollwert (v_{dhsc_ref}) durch den Offset (v_{offset}) nach unten anpasst, wenn das Fahrzeug für eine dritte vorbestimmte Zeitdauer (T₃) ohne das Antriebsmoment gefahren wird.

7. Verfahren nach einem der Ansprüche 1 bis 6, wobei
- das aktuelle Verhalten eine Verwendung einer Bremsmaßnahme einer Bergabfahrtsgeschwindigkeitssteuerung umfasst, und
- die Anpassung den Geschwindigkeitssollwert (v_{ref}) und den Bremssollwert (v_{dhsc_ref}) durch den Offset (v_{offset}) nach oben anpasst, wenn das Fahrzeug für eine vierte vorbestimmte Zeitdauer (T₄) ohne die Bremsmaßnahme gefahren wird.

8. Verfahren nach einem der Ansprüche 6 bis 7, wobei die Anpassung abwechselnd den Geschwindigkeitssollwert (v_{ref}) und den Bremssollwert (v_{dhsc_ref}) durch den Offset (v_{offset}) nach oben oder unten anpasst wie folgt:
- nach unten, wenn das Fahrzeug für eine dritte vorbestimmte Zeitdauer (T₃) ohne das Antriebsmoment gefahren wird, und
- nach oben, wenn das Fahrzeug für eine vorbestimmte Zeitdauer (T₄) ohne die Bremsmaßnahme gefahren wird.

9. Verfahren nach einem der Ansprüche 1 bis 8, wobei die Anpassung den Geschwindigkeitssollwert (v_{ref}) und den Bremssollwert (v_{dhsc_ref}) durch den Offset (v_{offset}) nach unten anpasst, wenn das Fahrzeug sich auf einer Abwärtsstrecke befindet, die wenigstens eine vorbestimmte Länge (L) hat.

10. Verfahren nach einem der Ansprüche 1 bis 9, wobei die Anpassung zu einer Hysterese für den Geschwindigkeitssollwert (v_{ref}) und den Bremssollwert (v_{dhsc_ref}) führt, die automatisch zwischen zwei Hysteresewerten alterniert, wobei eine Differenz zwischen den zwei Hysteresewerten durch den Offset (v_{offset}) definiert ist.

11. Verfahren nach einem der Ansprüche 1 bis 10, bei dem die zumindest eine Veränderung (v_{shift}) allmählich aufgebracht wird, so dass der Geschwindigkeitssollwert (v_{ref}) und der Bremssollwert (v_{dhsc_ref}) von einem ersten auf einen entsprechenden zweiten Wert hochgefahren werden.

12. Verfahren nach einem der Ansprüche 1 bis 11, bei dem die eingestellte Geschwindigkeit (vₛₑₜ) mit einer Geschwindigkeitsbegrenzung für einen Straßenabschnitt in Beziehung steht, auf dem sich das Fahrzeug befindet.

13. Computerprogramm mit Programmcode, der das Verfahren nach einem der Ansprüche 1 bis 12 durchführt, wenn der Programmcode auf einem Computer ausgeführt wird.

14. Computerprogrammprodukt mit einem computerlesbaren Medium und einem Computerprogramm nach Anspruch 13, wobei das Computerprogramm in dem computerlesbaren Medium enthalten ist.

15. System zum Regeln der Geschwindigkeit eines Fahrzeugs umfassend zumindest:
- einen Fahrtregler, der ein Motorsystem mit einem Geschwindigkeitssollwert (v_{ref}) basierend auf einer gewählten eingestellten Geschwindigkeit (vₛₑₜ) regelt, und
- eine Bergabfahrtsgeschwindigkeitssteuerung, die ein Bremssystem mit einem Bremssollwert (v_{dhsc_ref}) basierend auf einer Bergabfahrtsgeschwindigkeitssteuerungsgeschwindigkeit (v_{dhsc}) regelt, wobei die Bergabfahrtsgeschwindigkeitssteuerungsgeschwindigkeit (v_{dhsc}) über einen Offset (v_{offset}) mit der eingestellten Geschwindigkeit (vₛₑₜ) in Beziehung steht,
**gekennzeichnet durch**:
- ein Anpassungselement, das dazu angeordnet ist, den Geschwindigkeitssollwert (v_{ref}) und den Bremssollwert (v_{dhsc_ref}) durch zumindest eine Veränderung (v_{shift}) anzupassen, die einen dem Offset (v_{offset}, v_{shift} = v_{offset}) entsprechenden Wert hat, wobei das Anpassungselement dazu angeordnet ist, die Anpassung basierend auf einem aktuellen Verhalten des Fahrzeugs durchzuführen.

## Revendications

1. Procédé pour l'ajustement des points de consigne pour la régulation de la vitesse d'un véhicule, dans lequel ladite régulation de vitesse est effectuée via l'utilisation d'au moins :
- un régulateur de vitesse qui contrôle un système moteur avec un point de consigne de vitesse (v_{ref}) sur base d'une vitesse de consigne sélectionnée (vₛₑₜ) ;
et
- un contrôle de vitesse de descente qui contrôle un système de freinage avec un point de consigne de freinage (v_{dhsc_ref}) sur base d'une vitesse de contrôle de vitesse de descente (v_{dhsc}),
dans lequel ladite vitesse de contrôle de vitesse de descente (v_{dhsc}) est liée à ladite vitesse de consigne (vₛₑₜ) par un décalage (v_{offset})
**caractérisé par :**
un ajustement dudit point de consigne de vitesse (v_{ref}) et dudit point de consigne de freinage (v_{dhsc_ref}) par au moins un changement de vitesse (v_{shift}), qui a une valeur correspondant audit décalage (v_{offset}, v_{shift} = v_{offset}), dans lequel
dans lequel
- ledit ajustement est effectué sur base d'un comportement actuel dudit véhicule.

2. Procédé selon la revendication 1, dans lequel ledit ajustement par ledit au moins un changement de vitesse (v_{shift}) constitue une hystérésis courante de changement de vitesse pour ledit point de consigne de vitesse (vₛₑₜ) et pour ledit point de consigne de freinage (v_{dhsc_ref}).

3. Procédé selon l'une quelconque des revendications 1-2, dans lequel
- ledit comportement actuel comprend une vitesse actuelle (v_{act}) pour ledit véhicule, et
- ledit ajustement ajuste ledit point de consigne de vitesse (v_{ref}) et ledit point de consigne de freinage (v_{dhsc_ref}) vers le bas par ledit décalage (v_{offset}) si ladite vitesse actuelle (v_{act}) dépasse ladite vitesse de consigne (vₛₑₜ) définie pour une première période de temps prédéterminée (T₁).

4. Procédé selon l'une quelconque des revendications 1-3, dans lequel
- ledit comportement actuel comprend une vitesse actuelle (v_{act}) pour
ledit véhicule, et
- ledit ajustement ajuste ledit point de consigne de vitesse (v_{ref}) et ledit point de consigne de freinage (v_{dhsc_ref}) vers le haut par ledit décalage (v_{offset}) si ladite vitesse actuelle (v_{act}) est en dessous de la vitesse de consigne (vₛₑₜ) définie pour une deuxième période de temps prédéterminée (T₂).

5. Procédé selon l'une quelconque des revendications 3-4, dans lequel ledit ajustement ajuste de manière alternative ce point de consigne de vitesse (v_{ref}) et ledit point de consigne de freinage (v_{dhsc_ref}) vers le bas ou vers le haut selon ledit décalage (v_{offset}) comme suit : décalage
- vers le bas si ladite vitesse actuelle (v_{act}) dépasse ladite vitesse de consigne (vₛₑₜ) pour une première période de temps prédéterminée (T₁) et
- vers le haut si ladite vitesse actuelle (v_{act}) est en dessous de la vitesse définie (vₛₑₜ) pour une deuxième période de temps prédéterminée (T₂).

6. Procédé selon l'une quelconque des revendications 1-5, dans lequel
- ledit comportement actuel comprend une utilisation d'un couple moteur d'un système moteur dans ledit véhicule, et
- ledit ajustement ajuste ledit point de consigne de vitesse (v_{ref}) et ledit point de consigne de freinage (v_{dhsc_ref}) vers le bas par ledit décalage (v_{offset}) si ledit véhicule est entraîné sans ledit couple moteur pour une troisième période de temps prédéterminée (T₃).

7. Procédé selon l'une quelconque des revendications 1-6, dans lequel
- ledit comportement actuel comprend une utilisation d'une action de freinage d'un contrôle de vitesse de descente, et
- ledit ajustement ajuste ledit point de consigne de vitesse (v_{ref}) et ledit point de consigne de freinage (v_{dhsc_ref}) vers le haut par ledit décalage (v_{offset}) si ledit véhicule est entraîné sans ladite action de freinage pour une quatrième période de temps prédéterminée (T₄).

8. Procédé selon l'une quelconque des revendications 6-7, dans lequel ledit ajustement ajuste de manière alternative ledit point de consigne de vitesse (v_{ref}) et ledit point de consigne de freinage (v_{dhsc_ref}) vers le bas ou vers le haut selon ledit décalage (v_{offset}) comme suit :
- vers le bas si ledit véhicule est entraîné sans ledit couple moteur pour une troisième période de temps prédéterminée (T₃) et
- vers le haut si ledit véhicule est entraîné sans ladite action de freinage pour une quatrième période prédéterminée (T₄).

9. Procédé selon l'une quelconque des revendications 1-8, dans lequel ledit ajustement ajuste ledit point de consigne de vitesse (v_{ref}) et ledit point de consigne de freinage (v_{dhsc_ref}) vers le bas par décalage (v_{offset}) si ledit véhicule est sur un tronçon de descente qui a au moins une longueur prédéterminée (L).

10. Procédé selon l'une quelconque des revendications 1-9, dans lequel ledit ajustement entraîne une hystérésis pour ledit point de consigne de vitesse (v_{ref}) et ledit point de consigne de freinage (v_{dhsc_ref}) qui alterne automatiquement entre deux valeurs d'hystérésis, dans lequel une différence entre deux valeurs d'hystérésis est définie par ledit décalage (v_{offset}).

11. Procédé selon l'une quelconque des revendications 1-10, dans lequel ledit au moins un changement de vitesse (v_{shift}) est appliqué graduellement de sorte que ledit point de consigne de vitesse (v_{ref}) et ledit point de consigne de freinage (v_{dhsc_ref}) sont augmentés d'une première à une deuxième valeurs respectives.

12. Procédé selon l'une quelconque des revendications 1-11, dans lequel ladite vitesse de consigne (vₛₑₜ) est liée à une limite de vitesse pour une section de route sur laquelle ledit véhicule se situe.

13. Programme informatique comprenant un code de programme qui, exécute le procédé selon l'une quelconque des revendications 1-12 lorsque ledit code de programme est exécuté sur un ordinateur.

14. Produit de programme informatique comprenant un support lisible par ordinateur et un programme informatique selon la revendication 13, dans lequel ledit programme informatique est contenu dans ledit support lisible par ordinateur.

15. Système pour la régulation de la vitesse d'un véhicule comprenant au moins :
- un régulateur de vitesse qui régule un système moteur avec un point de consigne de vitesse (v_{ref}) sur base d'une vitesse de consigne sélectionnée (vₛₑₜ) ; et
- un contrôle de vitesse de descente qui contrôle un système de freinage avec un point de consigne de freinage (v_{dhsc_ref}) sur base d'une vitesse de contrôle de vitesse de descente (v_{dhsc}), dans lequel ladite vitesse de contrôle de vitesse de descente (v_{dhsc}) est liée à ladite vitesse de consigne (vₛₑₜ) par décalage (v_{offset}) **caractérisé par :**
- un élément d'ajustement, agencé afin d'ajuster ledit point de consigne de vitesse (v_{ref}) et ledit point de consigne de freinage (v_{dhsc_ref}) par au moins un changement de vitesse (v_{shift}), qui a une valeur correspondant audit décalage (v_{offset}, v_{shift} = v_{offset}), dans lequel ledit élément d'ajustement est agencé afin de réaliser ledit ajustement sur base d'un comportement actuel dudit véhicule.
